# EUROPÄISCHE PATENTSCHRIFT

(11) **EP 3 374 762 B1**
(45) Veröffentlichungstag und Bekanntmachung des Hinweises auf die Patenterteilung: **21.07.2021**
(21) Anmeldenummer: 16795275.3
(22) Anmeldetag: 08.11.2016
(51) Int. Cl.: G01N 22/04, A24C 5/34

(54) **VORRICHTUNG UND VERFAHREN ZUR BESTIMMUNG DES ANTEILS MINDESTENS EINES ZUSATZSTOFFS IN EINEM TABAKHALTIGEN STOFF, UND MASCHINE DER TABAK VERARBEITENDEN INDUSTRIE**
DEVICE AND METHOD FOR DETERMINING THE PROPORTION OF AT LEAST ONE ADDITIVE IN A SUBSTANCE CONTAINING TOBACCO, AND TOBACCO-PROCESSING INDUSTRY MACHINE
DISPOSITIF ET PROCÉDÉ DE DÉTERMINATION DE LA PROPORTION D'AU MOINS UN ADDITIF DANS UNE SUBSTANCE CONTENANT DU TABAC, ET MACHINE DE L'INDUSTRIE DU TRAITEMENT DU TABAC

(30) Priorität: 11.11.2015 DE 102015119453
(43) Veröffentlichungstag der Anmeldung: 19.09.2018
(73) Patentinhaber: Hauni Maschinenbau GmbH, 21033 Hamburg (DE)
(72) Erfinder: MÜLLER, Johannes, 22767 Hamburg (DE); STÖCKER, Ralf, 21465 Reinbek (DE); SOLLMANN, Michael, 21465 Wentorf (DE)
(74) Vertreter: Müller Verweyen
(86) Internationale Anmeldenummer: PCT/EP2016/076940
(87) Internationale Veröffentlichungsnummer: WO 2017/080982

(56) Entgegenhaltungen:
- EP-A2- 2 433 509
- EP-A2- 2 572 595
- GB-A- 2 489 586
- US-A1- 2011 093 212

## Beschreibung

Die vorliegende Erfindung betrifft eine Vorrichtung und ein Verfahren zur Bestimmung des Anteils mindestens eines Zusatzstoffs in einem tabakhaltigen Stoff, sowie eine Maschine oder Anlage der Tabak verarbeitenden Industrie umfassend eine solche Vorrichtung.

Es ist seit langem bekannt, die Feuchte und/oder Dichte eines Tabakstrangs mittels Mikrowellen zu messen.

In der Tabak verarbeitenden Industrie wird den Tabakfasern in der Produktion für bestimmte Endprodukte ein oder mehrere Zusatzstoffe beigefügt, wie beispielsweise Glycerin, Propandiol, Aromastoffe, etc. Zurzeit gibt es insbesondere im Online-Betrieb kein Verfahren, den Anteil des Zusatzstoffes oder die Anteile der Zusatzstoffe zu bestimmen. Eine Überprüfung der zugeführten Menge des Zusatzstoffes, beispielsweise zwecks Regelung des Zugabeprozesses, ist somit nicht möglich.

Diese Problematik betrifft neben den in einer Zigarettenherstellmaschine verarbeiteten Tabakfasern, beispielsweise in Strangform oder als Tabakstöcke, auch Anlagen zur Herstellung von Tabakfolien als Bahnware, die heute in vielerlei Form in der Tabak verarbeitenden Industrie Verwendung finden. Es mangelt insbesondere im Onlinebetrieb vor und bei der Verarbeitung an einer geeigneten Qualitätskontrolle.

EP 2 433 509 A2 offenbart eine Vorrichtung und ein Verfahren zur Messung von Eigenschaften eines Materialstrangs, insbesondere eines Zigarettenstrangs, mit einem Mikrowellenresonator.

US 2011/0093212 A1 offenbart eine Vorrichtung und ein Verfahren zur Bestimmung der Feuchte eines dielektrischen Materials.

EP 2 572 595 A2 offenbart eine Mikrowellenstrangmessvorrichtung zur Messung von Eigenschaften eines Materialstrangs der Tabak verarbeitenden Industrie.

GB 2 489 586 A offenbart ein Verfahren und eine Vorrichtung zur Ermittlung von Gewichtsanteilen von mehreren Inhaltsstoffen in einem Filtermaterial.

Die Aufgabe der Erfindung besteht darin, eine Vorrichtung und ein Verfahren zur Bestimmung des Anteils mindestens eines Zusatzstoffs in einem tabakhaltigen Stoff anzugeben, die in Maschinen und Anlagen der Tabak verarbeitenden Industrie insbesondere im Online-Betrieb einsetzbar sind.

Die Erfindung löst diese Aufgabe mit den Merkmalen der unabhängigen Ansprüche. Die Anteile von Tabak und Wasser (Feuchte) können mittels zweier Messgrößen, d.h. mittels Zwei-Größen-Messung, bestimmt werden. Dies ist für sich genommen bekannt und kann beispielsweise durch Messung mit einem elektromagnetischen Wechselfeld bei einer ersten Messfrequenz erreicht werden. Um den Anteil mindestens eines weiteren Zusatzstoffs zu bestimmen, wird erfindungsgemäß mindestens eine weitere Messgröße durch Messung mit einem zweiten elektromagnetischen Wechselfeld bei einer zweiten Messfrequenz, die verschieden von der ersten Messfrequenz ist, erhalten. Indem die Messgrößen, beispielsweise Betrag und Phase der elektromagnetischen Wechselfelder oder Resonanzverschiebung und -verbreiterung resonanter elektromagnetischer Wechselfelder bei zwei unterschiedlichen Messfrequenzen unabhängig voneinander gemessen werden, stehen insgesamt mindestens vier Messgrößen zur Verfügung, aus denen Rückschlüsse über die (Gewichts-)Anteile von Tabak, Wasser (Feuchte des tabakhaltigen Stoffs) und dem mindestens einen Zusatzstoff möglich sind. Im Prinzip genügen dazu bereits drei Messgrößen. Durch die Verwendung sämtlicher, beispielsweise vier Messgrößen und der dadurch erreichten Redundanz kann die Genauigkeit der Messung weiter erhöht werden, wie weiter unten noch im Detail beschrieben wird.

Ein tabakhaltiger Stoff ist jeder Stoff oder jedes Stoffgemisch, einschließlich Tabakfolie, der bzw. das ganz oder teilweise Tabak in beliebiger Verarbeitungsform, beispielsweise Tabakfasern, Tabakmehl, Tabakstaub etc. enthält. Stoffanteile können im Rahmen dieser Anmeldung insbesondere relative oder absolute Gewichts- oder Volumenanteile sein.

Der zu ermittelnde Anteil eines Zusatzstoffs kann ein relativer Wert, beispielsweise der relative Gewichtsanteil in Gewichtsprozent, oder ein absoluter Wert, beispielsweise das Gewicht des Zusatzstoffs in Gramm oder Gramm pro Produktlänge, sein. Der Begriff Messfrequenz ist nicht auf eine einzelne Frequenz beschränkt, sondern umfasst auch einen definierten Frequenzbereich um eine Messfrequenz. Der Begriff Zusatzstoff bedeutet, dass der Stoff dem Tabak zur Erzielung einer bestimmten Wirkung gezielt zugesetzt ist oder wird. Die Erfindung ist daher abgegrenzt von der sogenannten Fremdkörperdetektion, bei der unerwünschte Stoffe oder Körper in dem tabakhaltigen Stoff detektiert werden.

Der Erfindung ermöglicht insbesondere die Online-Ermittlung des Gewichtsanteils mindestens eines Zusatzstoffs, d.h. eine Messung im Produktionsbetrieb ohne Abzweigung aus dem Produktionsfluss, die beispielsweise bei Feststellung von Ausschusskriterien die Ausschleusung einzelner zu beanstandender Produkte ermöglicht.

Die Messfrequenzen sind so unterschiedlich gewählt, dass sich die Eigenschaften von Tabak, Wasser/Feuchte und dem mindestens einen Zusatzstoff bei den verschiedenen Messfrequenzen voneinander signifikant unterscheiden. Man erhält dann ein Gleichungssystem mit sich unterscheidenden Gleichungen, wobei der Rang des Gleichungssystems mindestens so groß wie die Anzahl der bezüglich ihres Gewichtsanteils zu bestimmenden Zusatzstoffe ist. In diesem Fall kann das Gleichungssystem nach dem Mengenverhältnis der zu bestimmenden Zusatzstoffe aufgelöst werden. Aufgrund der zusätzlichen Messung mit einem zweiten elektromagnetischen Wechselfeld bei einer zweiten Messfrequenz erhält man zwei weitere Messgrößen, die sich in eine weitere komplexe Mischpermittivität umwandeln lassen. Es können also mittels einer weiteren Messung mit einem zweiten elektromagnetischen Wechselfeld bei einer zweiten Messfrequenz die Gewichtsanteile zweier Zusatzstoffe bestimmt werden. Ein überbestimmtes Gleichungssystem kann hingegen dazu genutzt werden, die beste Lösung beispielsweise im Sinne der kleinesten Fehlerquadrate zu approximieren, um den Gewichtsanteil lediglich eines Zusatzstoffes (bzw. die Gewichtsanteile einer geringeren als der maximal möglichen Anzahl von Zusatzstoffen) zu bestimmen, diesen jedoch mit höherer Genauigkeit. Diese Lösung ermöglicht zudem eine Fehlerabschätzung. Beste Lösung kann insbesondere eine Lösung sein, bei der eine mathematische Kostenfunktion minimal wird.

Entscheidend für den Erfolg der Erfindung ist eine günstige Auswahl der Messfrequenzen, und zwar unter Berücksichtigung der Relaxationsfrequenzen von Tabak, Wasser und des zu bestimmenden Zusatzstoffs bzw. der zu bestimmenden Zusatzstoffe. Die Messfrequenzen sollten dabei so gewählt werden, dass sich die daraus ergebenden Gleichungen möglichst stark voneinander unterscheiden. Vorteilhaft wird die Messfrequenzen in Abhängigkeit von einer Relaxationsfrequenz f0 des Zusatzstoffs gewählt. Wenn beispielsweise ein Zusatzstoff eine Relaxationsfrequenz f0 aufweist, so bieten sich drei Frequenzbereiche für die Messfrequenzen vorteilhaft an, nämlich ein Bereich um eine Relaxationsfrequenz f0, in dem eine starke Änderung des Messsignals durch den Zusatzstoff zu erwarten ist; ein Bereich, in dem die Frequenzen klein gegen die Relaxationsfrequenz f0, d.h. mindestens eine Größenordnung kleiner, und/oder ein Bereich, in dem die Frequenzen groß gegen die Relaxationsfrequenz f0, d.h. mindestens eine Größenordnung größer sind, weil sich hier der Einfluss des Zusatzstoffs stark von der Messung bei der Relaxationsfrequenz f0 unterscheidet. Vergleichbares gilt für die Frequenzbereiche bezüglich der Relaxationsfrequenzen von Tabak und Wasser/Feuchte. Vorteilhaft unterscheiden sich die erste und zweite Messfrequenz voneinander um mindestens einen Faktor 10 und/oder um mindestens 3 GHz.

Vorzugsweise liegt mindestens eine der Messfrequenzen im Mikrowellenbereich zwischen 300 MHz und 50 GHz, weiter vorzugsweise zwischen 1 GHz und 30 GHz, noch weiter vorzugsweise zwischen 4 GHz und 10 GHz. Ebenfalls vorteilhaft liegt mindestens eine der Messfrequenzen im Hochfrequenzbereich zwischen 100 kHz und 300 MHz, weiter vorzugsweise zwischen 1 MHz und 10 MHz. Jedoch kann die Sensoranordnung auch Sensoren aufweisen, die auf anderen Messfrequenzen beruhen. Beispielsweise kann vorteilhaft mindestens eine der Messfrequenzen im optischen Bereich, d.h. im sichtbaren, infraroten und/oder ultravioletten Frequenzbereich liegen.

Die aufgrund der Messung bei der zweiten Messfrequenz erfindungsgemäß erhaltene zusätzliche Information kann unterschiedlich genutzt werden. Beispielsweise können die Feuchte und die Gewichtsanteile des Tabaks und des Zusatzstoffs aus den mindestens vier ermittelten Messgrößen in der Datenverarbeitungsvorrichtung als beste Lösung eines überbestimmten Gleichungssystems beispielsweise mit minimalen Fehlerquadraten vorteilhaft bestimmt werden. Diese Lösung ist zum einen genauer, zum anderen können Fehler abgeschätzt werden. In einer anderen vorteilhaften Anwendung können durch eine Messung bei zwei Messfrequenzen die Gewichtsanteile von zwei Zusatzstoffen zusätzlich zu der Feuchte und dem Gewichtsanteil des Tabaks bestimmt werden.

In einer bevorzugten Anwendung umfasst der mindestens eine Zusatzstoff einen Aerosolbildner, insbesondere Glycerin, Propandiol und/oder einen Aromastoff. Die Anteile solcher Zusatzstoffe können bisher an oder in einer Maschine oder Anlage der Tabak verarbeitende Industrie nicht online bestimmt werden.

Wenn die Messung bei beiden Messfrequenzen vorteilhaft an demselben Messort, bei im Wesentlichen gleicher Feldgeometrie der elektromagnetischen Wechselfelder, an demselben Tabakabschnitt, Strang- oder Tabakfolienabschnitt und bei im Wesentlichen gleicher Temperatur erfolgt, ist eine Selbstreferenz gegeben und aufwändige entsprechende Kalibriermaßnahmen können entfallen.

Vorzugsweise umfasst die Sensoranordnung mindestens einen auf einem Resonator beruhenden Sensor, wobei sich in dem Resonator ein stehendes elektromagnetisches Wechselfeld ausbildet. Der Resonator kann insbesondere ein Oberflächenkoaxialresonator, Streufeldresonator, ein zweiteiliger Resonator mit separaten, voneinander beabstandet angeordneten Resonatorhälften zur Bildung eines Messspalts, Gabelresonator, Hohlleiter-Transmissionsresonator oder Hohlleiter-Reflexionsresonator sein.

Der erfindungsgemäße Lösungsvorschlag ist prinzipiell unabhängig vom Messort in einer Maschine oder Anlage der Tabak verarbeitenden Industrie, wobei die Sensoranordnung vorteilhaft in einer Messbeziehung zu einem Tabakstrangabschnitt, Tabakstöcken und/oder bahnförmiger Tabakfolie angeordnet ist.

Vorzugsweise wird der ermittelte Gewichtsanteil des Zusatzstoffs mit einem Sollwert verglichen. In einer bevorzugten Anwendung der Erfindung kann auf der Grundlage des bestimmten Zusatzstoffanteils eine (online-)Regelung der Maschine oder Anlage, insbesondere einer Zugabevorrichtung zur Zugabe des Zusatzstoffs zu dem tabakhaltigen Stoff durchgeführt werden, insbesondere wenn der bestimmte Zusatzstoffanteil (Istwert) von dem Sollwert um ein vorgegebenes Maß abweicht oder vorgegebene Grenzen über- oder unterschreitet, oder außerhalb eines vorgegebenen Bereichs liegt.

Ein vorteilhafter Aspekt der Erfindung betrifft die Bestimmung eines Zusatzstoffs in einer Tabakfolie, insbesondere einer Tabakfolienbahn. Tabakfolie bezeichnet hier eine Folie mit einem vorgegebenen Tabakanteil. Um eine reproduzierbare und verlässliche Eingangskontrolle vor der Verarbeitung in einer die Folienbahn weiterverarbeitenden Maschine, insbesondere einer Zigarettenherstellmaschine oder einer Crimpeinheit, durchführen zu können, wird vorzugsweise eine Sensoranordnung mit wenigstens einem, vorzugsweise wenigstens zwei, weiter vorzugsweise mindestens drei Mikrowellensensoren vorgeschlagen. Die Sensoranordnung kann vorteilhaft im Bereich zwischen einer Auf-/Abwickelvorrichtung und/oder einer Tabakfolienherstellungs- oder -weiterverarbeitungsmaschine einerseits und einem Verteiler oder einer Strangeinheit einer Zigarettenproduktionsmaschine oder einer Crimpeinheit andererseits vorgesehen sein. Insbesondere kann die Sensoranordnung vorteilhaft ausgangsseitig einer Abwickelvorrichtung und/oder einer Tabakfolienherstellungsmaschine oder -anlage und/oder eingangsseitig einer Aufwickelvorrichtung eines Verteilers oder einer Strangeinheit einer Zigarettenproduktionsmaschine oder einer Crimpeinheit vorgesehen sein. Die zuvor erwähnte Abwickelvorrichtung kann beispielsweise ein Bobinenwechsler oder ein Bobinendepalettierer mit Bobinenspuleinrichtungen sein. Die erwähnte Aufwickelvorrichtung kann eine Folienbahnaufwickelvorrichtung sein, welche einer Folienbahnherstellungsmaschine oder -anlage oder einer Längsschneideeinheit nachgeordnet ist.

Für Tabakfolie betreffenden Aspekt der Erfindung ist es vorteilhaft, wenn die Sensoranordnung mindestens einen auf einem Resonator, insbesondere einem Oberflächenkoaxialresonator, Streufeldresonator, zweiteiliger Resonator mit voneinander beabstandet angeordneten Resonatorhälften, Gabelresonator, Hohlraumresonator, Hohlleiter-Transmissionsresonator oder Hohlleiter-Reflexionsresonator, beruhenden Sensor umfasst. Dabei sind für die Zigarettenherstellmaschinen vorteilhaft die Bauformen Hohlraumresonator, Hohlleiter-Transmissionsresonator oder Hohlleiter-Reflexionsresonator vorgesehen, während für die Folienherstellungsmaschinen und Anlagen der Tabakvorbereitung die Bauformen Oberflächenkoaxialresonator oder Streufeldresonator bevorzugt sind. Für die Auf- und/oder Abwickelvorrichtungen sind bevorzugt die Bauformen Hohlleiter-Transmissionsresonator oder Hohlleiter-Reflexionsresonator, insbesondere in den Bauformen Gabelresonator oder zweiteiliger Resonator, und/oder Oberflächenkoaxialresonator.

Erfindungsgemäß werden den Messsignalen der Sensoranordnung Positionssignale eines Weggebers, insbesondere eines Drehimpulsgebers, eines Absolutweggebers oder eines Messrades zugeordnet, so dass eine ortsaufgelöste Zuordnung der Messsignale der Sensoranordnung hergestellt wird.

Die Erfindung wird im Folgenden anhand bevorzugter Ausführungsformen unter Bezugnahme auf die beigefügten Figuren erläutert. Dabei zeigt
- Fig. 1: eine perspektivische Darstellung einer Zigarettenherstellmaschine;
- Fig. 2: Frequenzdiagramme mit Real- und Imaginärteil der Permittivität von Glycerin;
- Fig. 3: eine perspektivische Darstellung einer Sensoranordnung zur Messung an bahnförmigem Tabakmaterial;
- Fig. 4: eine schematische Darstellung einer Maschine zur Herstellung einer Tabakfolie;
- Fig. 5: eine schematische Darstellung einer Maschine zur Herstellung einer mehrlagigen tabakhaltigen Folie; und
- Fig. 6: eine schematische Darstellung einer eine Tabakfolie verarbeitende Strangmaschine.

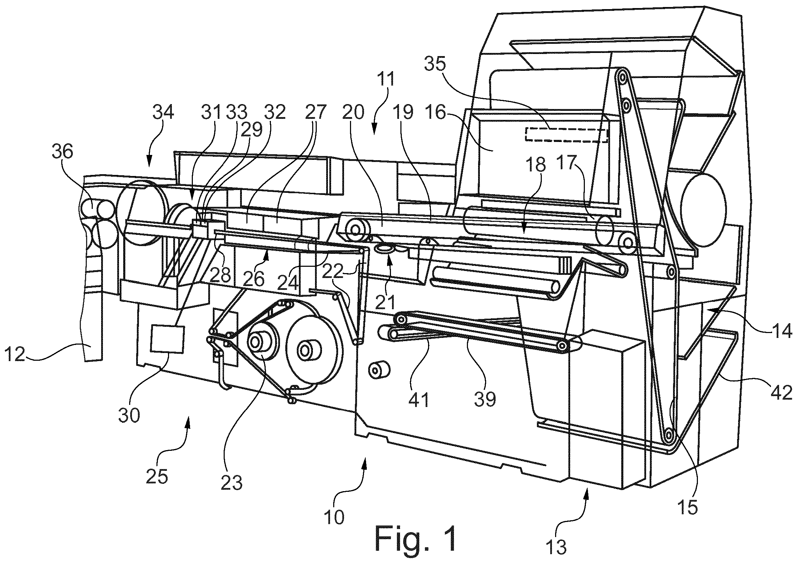

Die in Fig. 1 dargestellte Zigarettenherstellmaschine 10 umfasst eine Verteiler/Strangeinheit 11 mit einem Verteiler 13 und einer Strangeinheit 25, und einen nachfolgend angeordneten, in Fig. 1 nur angedeuteten Filteransetzer 12. Der Verteiler 13 umfasst ein auch als Kiepe bezeichnetes Tabakreservoir 14, das von oben mit Tabakmaterial befüllt wird. Aus dem Tabakreservoir 14 wird mittels eines Steilförderers 15 Tabak entnommen. Der Verteiler 13 umfasst des Weiteren einen Stauschacht 16, aus dem der Tabak mittels einer Vereinzelungsvorrichtung 17 entnommen und dadurch vereinzelt wird, und eine Sichtvorrichtung 18 zum Sichten des Tabaks, insbesondere zum Aussichten von Rippen aus dem Tabakmaterial. Die Sichtvorrichtung 18 kann beliebig ausgeführt sein; in einer nicht gezeigten Ausführungsform kann es sich beispielsweise um einen Zickzack-Sichter handeln. Der Stauschacht 16 und die Vereinzelungsvorrichtung 17 können insbesondere auch hinter, d.h. stromabwärts von der Sichtvorrichtung 18, angeordnet sein.

Schließlich wird der gesichtete Tabak gegen mindestens einen Saugstrangförderer bzw. ein Saugband 19 geschleudert, an dem der Tabak mittels in einer Unterdruckkammer 20 erzeugtem Unterdruck gehalten und ein Tabakstrang aufgeschauert wird. Mittels eines Trimmers 21 wird überschüssiger Tabak von dem Tabakstrang entfernt und gelangt beispielsweise mittels eines Förderbands 39, 41 in einen Behälter 42, aus dem der rückgeführte Tabak von dem Steilförderer 15 wieder entnommen werden kann.

Der Tabakstrang wird dann auf einen im Gleichlauf geführten Zigarettenpapierstreifen 22 gelegt, der von einer Bobine 23 abgezogen und auf ein angetriebenes Formatband 24 gelegt wird. Das Formatband 24 transportiert den Tabakstrang und den Zigarettenpapierstreifen 22 durch ein Format 26, in dem der Zigarettenpapierstreifen 22 um den Tabakstrang gelegt wird. Ein abstehender Randbereich des Zigarettenpapierstreifens 22 wird mittels einer nicht gezeigten Leimdüse beleimt. Anschließend wird die Klebenaht geschlossen und mittels einer Nahtplätte 27 getrocknet, so dass auf diese Weise mindestens ein mit Zigarettenpapier umhüllter Tabakstrang 28 erzeugt wird. Der Tabakstrang wird von einem Messerapparat 31 in doppeltlange Tabakstöcke geschnitten, die von einer Übergabevorrichtung 34 an eine Übernahmetrommel 36 der Filteransetzmaschine 12 übergeben werden.

In der Verteiler/Strangeinheit 11, hier vorteilhaft in der Strangeinheit 25, ist eine Sensoranordnung 29 insbesondere in Messbeziehung zu dem Tabakstrang 28 angeordnet. Die Sensoranordnung 29 ist zum Betrieb mit mindestens zwei elektromagnetischen Wechselfeldern unterschiedlicher Messfrequenzen eingerichtet, die in Wechselwirkung mit dem Tabakstrang 28 treten. Die Sensoranordnung 29 umfasst zu diesem Zweck vorzugsweise mindestens zwei Sensoren 32, 33, wobei jeder Sensor 32, 33 zum Betrieb mit einem elektromagnetischen Wechselfeld einer bestimmten Messfrequenz eingerichtet ist.

Die Sensoranordnung 29 ist im vorliegenden Ausführungsbespiel vorteilhaft zwischen der Nahtplätte 27 und dem Messerapparat 31 angeordnet. Andere Anordnungen der Sensoranordnung 29 in der Zigarettenherstellmaschine 10 sind möglich, beispielsweise in der Strangeinheit 25 vor der Nahtplätte 27 oder hinter dem Messerapparat 31 (zur Messung an Tabakstöcken), in dem Verteiler 13 oder in dem Filteransetzer 12.

Zur Erzeugung einer Messfrequenz im Mikrowellenbereich zwischen 300 MHz und 50 GHz ist vorteilhaft mindestens einer der Sensoren 32, 33 ein auf dem Resonatorprinzip beruhender Mikrowellensensor. Bewährte, auf Hohlraumresonatoren bzw. dielektrischen Resonatoren beruhende Mikrowellensensoren der Anmelderin sind beispielsweise aus der DE 197 05 260 B, DE 198 54 550 C und EP 0 753 755 A bekannt, deren Offenbarungsgehalt in die vorliegende Anmeldung aufgenommen wird. Andere geeignete Bauformen und/oder nicht-resonant arbeitende Mikrowellensensoren sind möglich.

Zur Erzeugung einer Messfrequenz im Hochfrequenzbereich zwischen 1 MHz und 300 MHz ist vorteilhaft mindestens einer der Sensoren 32, 33 ein kapazitiver Hochfrequenzsensor. Bewährte, auf mindestens einem Messkondensator beruhende Hochfrequenzsensoren der Anmelderin sind beispielsweise aus der DE 10 2004 063 228 B und DE 10 2011 083 052 A bekannt, deren Offenbarungsgehalt in die vorliegende Anmeldung aufgenommen wird. Andere geeignete Bauformen sind möglich.

Die Sensoranordnung 29 ist nicht auf Mikrowellen- und/oder Hochfrequenzsensoren beschränkt. Zusätzlich oder alternativ können optische Sensoren, insbesondere Infrarot-oder UV-Sensoren oder Sensoren, die im Sichtbaren arbeiten, verwendet werden.

Die optimale Wahl geeigneter Messfrequenzen wird später anhand eines praktischen Anwendungsbeispiels erläutert.

Die Sensoranordnung 29 gibt elektrische Messsignale, die Information aus der Wechselwirkung der elektromagnetischen Wechselfelder mit dem Tabakstrang 28 enthalten, an eine Datenverarbeitungseinrichtung 30 aus, die in Fig. 1 nur schematisch gezeigt ist. Die Datenverarbeitungseinrichtung 30 kann beispielsweise in der Maschinensteuerung der Maschine 10 oder in einem separaten internen oder externen Computer realisiert sein. Die Datenverarbeitungseinrichtung 30 kann vorteilhaft mit einer nicht gezeigten Bildschirm-Anzeigevorrichtung verbunden sein, auf dem die ausgewerteten Messergebnisse insbesondere für den Maschinenbediener angezeigt werden können.

Die Datenverarbeitungseinrichtung 30 ermittelt aus den von der Sensoranordnung bereitgestellten Messsignalen mindestens vier Messgrößen, insbesondere zwei Messgrößen für jedes der mindestens zwei elektromagnetischen Wechselfelder. Im Falle von resonanten Mikrowellensensoren ist die Bestimmung zweier unabhängiger Messgrößen aus dem Mikrowellensignal bekannt. Die beiden Messgrößen können beispielsweise die Resonanzfrequenzverschiebung und die Güteänderung bzw. Dämpfung der Resonanzkurve gegenüber einem von dem Tabak unbeeinflussten Signal sein, siehe DE 197 34 978 B, deren Offenbarungsgehalt in die vorliegende Anmeldung aufgenommen wird. Die beiden Messgrößen können alternativ beispielsweise Gleichanteile und Wechselanteile in dem Mikrowellensignal an zwei festgelegten Frequenzpunkten mit einem relativ geringen Frequenzabstand von beispielsweise 20 MHz bis 40 MHz sein, die im Sinne dieser Anmeldung als einheitliche Messfrequenz angesehen werden. Dieses Verfahren wird beispielsweise in der EP 0 791 823 A eingehend beschrieben, deren Offenbarungsgehalt in die vorliegende Anmeldung aufgenommen wird.

Aus den mindestens vier ermittelten Messgrößen bestimmt die Datenverarbeitungseinrichtung 30 einerseits die Feuchte und den (Trocken-)Gewichtsanteil des Tabaks und andererseits je nach Anwendungsfall den Gewichtsanteil eines oder mehrerer Zusatzstoffe in dem Tabakstrang 28.

Dies wird im Folgenden anhand eines praktischen Beispiels erläutert. Dabei sei angenommen, dass dem in der Zigarettenherstellmaschine 10 verarbeiteten Tabak der Zusatzstoff Glycerin beigemischt ist oder wird, beispielsweise vor der Zuführung des Tabaks zu dem Verteiler 13 oder mittels einer in Fig. 1 nur schematisch angedeuteten Dosiereinrichtung 35 in dem Verteiler 13. Die Sensoranordnung 29 dient in diesem Ausführungsbeispiel dazu, den Gewichtsanteil von Glycerin in dem Tabakstrang 28 zu bestimmen.

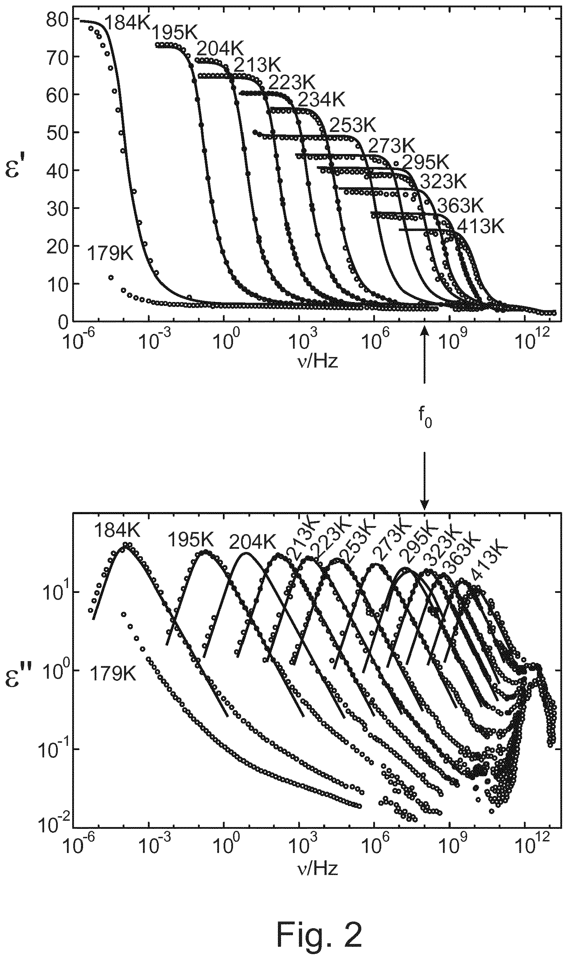

In Fig. 2 ist der Verlauf des Realteils ε' (oben) und des Imaginärteils ε" (unten) der komplexen dielektrischen Permittivität ε von Glycerin über der Frequenz für unterschiedliche Temperaturen aufgetragen. Glycerin hat eine deutlich höhere Relaxationszeit τ als Wasser, weshalb der charakteristische Abfall von ε' und das damit einhergehende lokale Maximum der Verluste ε" bei deutlich niedrigeren Frequenzen liegt (f0 = 1/τ). Zudem fällt eine sehr ausgeprägte Abhängigkeit von der Temperatur auf.

Für die Tabakverarbeitung kann die Temperatur von 295 K (22 °C) betrachtet werden. Wie aus dem unteren Diagramm in Fig. 2 ersichtlich ist, liegt das lokale Maximum der Verluste ε" und somit die Relaxationsfrequenz f0 von Glycerin bei 22 °C ungefähr bei 100 MHz. Bezogen auf das dielektrische Spektrum von Glycerin bieten sich somit drei Frequenzbereiche an: Erstens Frequenzen f«f0 deutlich unterhalb der Relaxationsfrequenz, hier insbesondere unterhalb von 1 MHz, in denen ε' hoch und ε" niedrig ist; zweitens Frequenzen im Bereich der Relaxationsfrequenz f ≈ f0, hier insbesondere im Hochfrequenzbereich zwischen 1 MHz und 300 MHz, in denen ε' mittel, ε" hoch und |δε'/δf| hoch ist; sowie drittens Frequenzen f»f0 deutlich oberhalb der Relaxationsfrequenz, hier insbesondere oberhalb von 1 GHz, in denen ε' niedrig und ε" hoch ist.

In einer praktischen Ausführungsform kann somit einer der Sensoren 32, 33 ein resonant arbeitender Mikrowellensensor mit einer Messfrequenz f1 oberhalb von 1 GHz und der andere Sensor 33, 32 ein Hochfrequenzsensor mit einer Messfrequenz f2 zwischen 100 kHz und 300 MHz sein. In einer anderen vorteilhaften Ausgestaltung wird die Verwendung zweier Mikrowellensensoren 32, 33 beispielsweise mit Messfrequenzen von f1 ≈ 1 GHz und f2 >= 10 GHz vorgeschlagen.

Die genaue Wahl der Messfrequenzen erfolgt unter Berücksichtigung der Relaxationsfrequenzen von Glycerin (siehe oben), Tabak und Wasser. Vorteilhaft wird der Abstand der Messfrequenzen f1, f2 möglichst groß gewählt, wobei sich die Messfrequenzen f1, f2 vorzugsweise um mindestens den Faktor 10 und/oder um mindestens 3 GHz, weiter vorzugsweise um mindestens 5 GHz, noch weiter vorzugsweise um mindestens 10 GHz voneinander unterscheiden.

Aus den von der Sensoranordnung 29 ausgegebenen Messsignalen ermittelt die Datenverarbeitungseinrichtung 30 wie zuvor beschrieben vier Messgrößen. Das überbestimmte Gleichungssystem kann genutzt werden, um die beste Lösung für die drei Zielgrößen Feuchte, Gewichtsanteil Tabak und Gewichtsanteil Glycerin beispielsweise im Sinne der kleinsten Fehlerquadrate zu approximieren. Es ist dann beispielsweise möglich, die Zugabe von Glycerin in der Maschine 10 auf der Grundlage des somit bestimmten Glyceringehalts zu steuern und/oder zu regeln.

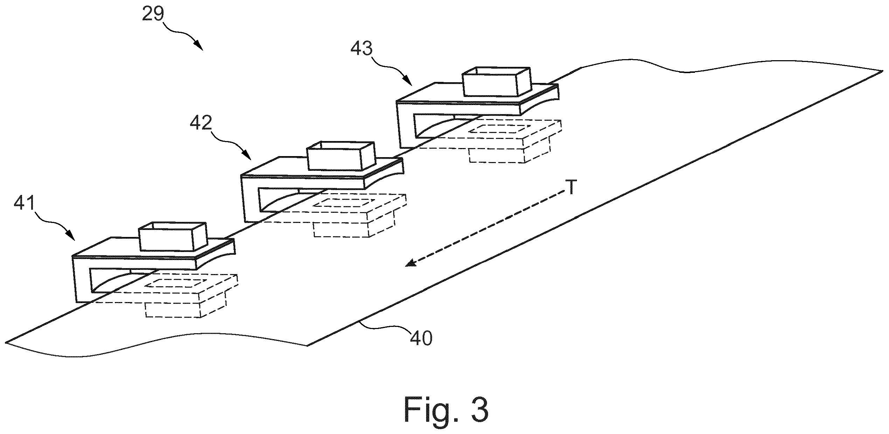

Die Ausführungsform gemäß Fig. 3 zeigt eine Sensoranordnung 29 zur Messung an einer bahnförmigen Tabakfolie 40, die in Richtung des gestrichelten Pfeils durch eine Maschine der Tabak verarbeitenden Industrie gefördert wird. Tabakfolie bezeichnet hier eine Folie mit einem vorgegebenen Tabakanteil. Die Sensoranordnung 29 umfasst drei hier gabelförmige Mikrowellensensoren 41, 42, 43 mit jeweils zwei einseitig miteinander verbundenen Schenkeln, zwischen denen die Tabakfolienbahn 40 verläuft, so dass die Mikrowellenfelder durch die Tabakfolienbahn 40 hindurchtreten und somit mit dieser in Wechselwirkung treten. Die gabelförmigen Sensoren 41, 42, 43 sind somit ausgebildet, um den Randbereich der bewegten Tabakfolienbahn 40 berührungsfrei zu umfassen.

Die Sensoren 41, 42, 43 zur Messung an Tabakfolie sind vorteilhaft als Hohlleiter-Transmissionsresonator oder als Hohlleiter-Reflexionsresonator ausgebildet. Die Sensoren 41, 42, 43 sind mit unterschiedlichen Messfrequenzen im Sinn der Erfindung betreibbar. Aus den von den drei Sensoren 41, 42, 43 bereitgestellten Messsignalen können somit insgesamt sechs Messgrößen ermittelt werden, auf deren Grundlage die Gewichtsanteile von bis zu vier Zusatzstoffen ermittelt werden können, oder die Gewichtsanteile von weniger als vier Zusatzstoffen mit höherer Genauigkeit, wie zuvor beschrieben. Zusätzlich oder alternativ kann vorteilhaft die Feuchte, Dichte, Dicke, Grammatur, Porosität, Flächendichte, Flächengewicht, Flächenfeuchte und/oder der Glyceringehalt der Tabakfolienbahn 40 ermittelt werden. Dies kann vorzugsweise ortsaufgelöst über die Breite und/oder einen Längenabschnitt geschehen. Insbesondere in der Folienherstellung kann vorteilhaft die Foliendicke online nachgeregelt werden, wenn der zuvor ermittelte Wert für die Foliendicke (Istwert) eine vorgegebene Grenze über- oder unterschreitet und/oder außerhalb eines vorgegebenen Bereichs liegt.

In einer Ausführungsform wird die Tabakfolienbahn 40 mit einer vorgegebenen Zugkraft, vorzugsweise in einer Führung, beispielsweise zwischen zwei Walzenanordnungen, an der Sensoranordnung 29 vorbeigeführt.

In einer nicht gezeigten Ausführungsform sind wenigstens zwei, vorzugsweise mindestens drei Mikrowellensensoren vorgesehen, die oberhalb der bewegten Tabakfolienbahn 40, insbesondere maschinenfest oder quer zur Förderrichtung bewegbar, angeordnet sind. In diesem Fall sind die Mikrowellensensoren vorzugsweise als Oberflächenkoaxialresonatoren oder als Streufeldresonatoren ausgebildet.

In den Ausführungsformen zur Messung an bahnförmiger Tabakfolie bzw. Tabakfolienbahn 40 kann die Sensoranordnung 29 vorteilhaft einen nicht gezeigten optischen Sensor aufweisen. Der optische Sensor kann dabei als Entfernungs- bzw. Distanzsensor zum Erfassen der Dicke der Folienbahn ausgebildet sein. Zusätzlich oder alternativ kann der optische Sensor als Infrarot- oder Nahinfrarot-Sensor zum Erfassen der Faserart und/oder Faserstruktur und/oder Faserrichtung der Tabakfolienbahn 40 ausgebildet sein.

In vorteilhaften Ausführungsformen kann die Sensoranordnung 29 einen Wegsensor aufweisen, der mit einem Fördermittel zum Fördern der Tabakfolienbahn 40 in Wirkverbindung steht.

Die vorliegende Erfindung nutzt den Effekt aus, dass der Verlauf der Permittivität für verschiedene Substanzen frequenzabhängig unterschiedlich ist. Beispielsweise weist der Realteil ε' der Permittivität ε von Glycerin wegen des leicht polaren Charakters dieses Moleküls bei etwa 10 MHz einen deutlich größeren Wert auf als bei 5 GHz (siehe Fig. 2), während der Realteil ε' der Permittivität ε von Tabakfasern bis zu einer Grenze von etwa 10% Feuchte bei beiden Frequenzen nahezu den gleichen Wert aufweist. Der temperatur-und frequenzabhängige Verlauf der Permittivität ε von Wasser, einem weiteren Bestandteil des Tabaks, ist ebenfalls bekannt.

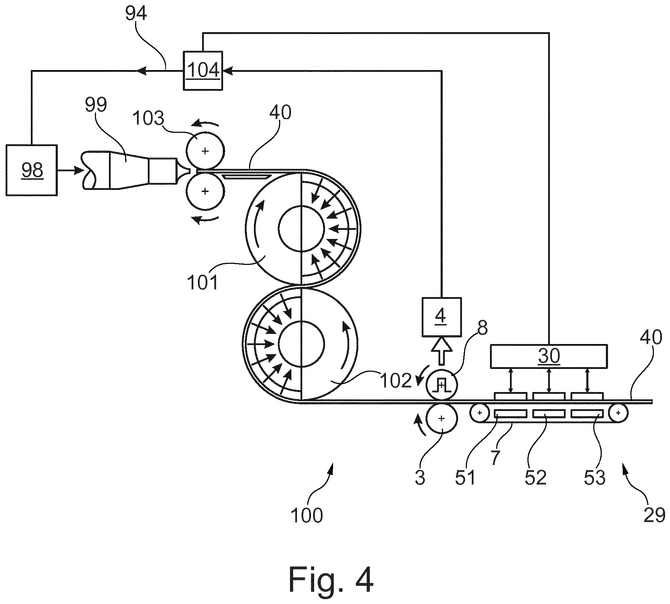

Fig. 4 betrifft eine vorteilhafte Anwendung der Erfindung in einer Maschine 100 zur Herstellung einer Tabakfolie 40. Dazu wird eine breiige Masse aus biogenem Material, insbesondere Tabakfasern, über eine Breitschlitzdüse 99 von einem nur schematisch dargestellten Extruder 98 einem Formungswalzenpaar 103 zugeführt. Der Walzenspalt des Formungswalzenpaars 103 ist durch Veränderung der Position der Walzen des Formungswalzenpaars 103 einstellbar. Anschließend wird das Vorprodukt der Tabakfolie 40 einem ersten Trocknungszylinder 101 und anschließend einem zweiten Trocknungszylinder 102 zugeführt, die mit nicht dargestellten Trocknungseinrichtungen 105, 106 zusammenwirken, um dem Vorprodukt der Tabakfolie 40 Feuchtigkeit zu entziehen.

In der anschließenden Lagenbildungssektion 200 wird die Tabakfolie 40 durch ein Abzugswalzenpaar 3 gefördert und auf eine gewünschte Materialstärke komprimiert. Das Abzugswalzenpaar 3 umfasst einen Signal- bzw. Weggeber 8, der ein Positionssignal bezüglich der Lage der Tabakfolie 40 in Förderrichtung über eine Ausleseeinheit 4 an eine elektronische Steuereinrichtung 104 ausgibt. Stromabwärts des Abzugswalzenpaars 3 befindet sich beispielsweise im Bereich eines Saugbandförderers 7 die Sensoranordnung 29, die mindestens zwei, hier drei HF- und/oder Mikrowellensensoren 51, 52, 53 umfasst.

Durch erfindungsgemäße Auswertung der Signale von den Sensoren 51, 52, 53 in der Datenverarbeitungseinrichtung 30 werden die Anteile von Tabak, Wasser, Glycerin und Bindemittel in der Tabakfolie 40 ermittelt und an die Steuereinrichtung 104 gesendet. Die Steuereinrichtung 104 regelt die noch dickflüssigen Extruderanteile, insbesondere Wasser, Glycerin und Bindemittel, auf der Grundlage der gemessenen und von der Datenverarbeitungseinrichtung 30 übermittelten Ist-Anteile. Die Regelung durch die Steuereinrichtung 104 erfolgt vorteilhaft unter Berücksichtigung der Positionssignale von dem Weggeber 8, so dass eine ortsaufgelöste Zuordnung der Messsignale der Sensoranordnung 29 hergestellt werden kann. Stromabwärts von der Sensoreinheit 29 können weitere Funktionseinheiten der Maschine 100 folgen.

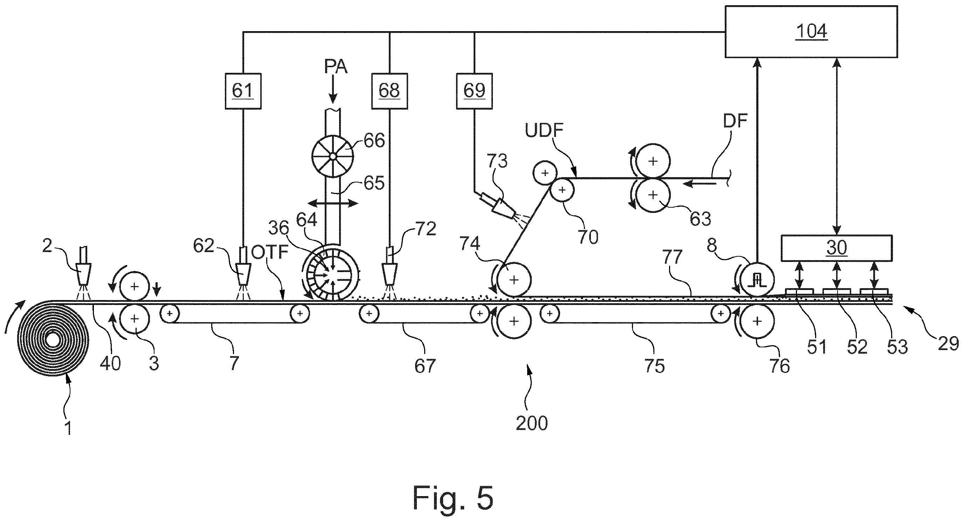

Fig. 5 betrifft eine vorteilhafte Anwendung der Erfindung in einer Maschine 200 zur Herstellung einer mehrlagigen Tabakfolie 77. Eine beispielsweise durch eine Maschine 100 gemäß Fig. 4 produzierte Tabak-Trägerfolie 40 wird als Bandware durch eine Abwickelvorrichtung 1 bereitgestellt. Die Oberseite OTF der Trägerfolie 40 kann mittels Spritzdüsen 2 angefeuchtet werden. Im Bereich des Saugbandförderers 7 ist eine Auftragsvorrichtung 62, beispielsweise Spritzdüsen, zum Auftragen von Klebstoff aus einem Reservoir 61 auf die Trägerfolie 40 vorgesehen.

Anschließend werden pflanzliche Partikel PA aus einem nicht gezeigten Magazin entnommen und über eine Schleuse 66 und einen Vibrationsschacht 65 mittels eines Auftragszylinders 14 auf die mit Klebstoff versehene Oberseite OTF der Trägerfolie 40 aufgebracht.

Weiterhin wird Glycerin über eine weitere Auftragseinrichtung 72, beispielsweise Spritzdüsen, aus einem Reservoir 68 auf die Oberseite OTF der Trägerfolie 40 aufgetragen. Dies kann beispielsweise im Bereich eines weiteren Saugbandförderers 67 geschehen.

Danach wird Deckfolie DF, die beispielsweise als Bandfolie bereitgestellt wird, über ein Abzugswalzenpaar 63 abgezogen und über ein Umlenkzylinderpaar 70 in Richtung der Förderebene der Trägerfolie 40 umgelenkt. Hier erfolgt ein Auftrag von Klebstoff mit einer weiteren Auftragseinrichtung 73 aus einem Reservoir 69 auf eine Unterseite UDF der Deckfolie DF.

Mithilfe eines in der Förderebene der Trägerfolie 40 angeordneten Andruckwalzenpaars 74 werden die Trägerfolie 40 und die Deckfolie DF zusammengefügt. Auf diese Weise wird eine mehrlagige tabakhaltige Folie 77 erhalten, in welcher die Partikel PA eingebettet sind.

Im Anschluss an einen weiteren Saugbandförderer 75 folgt ein Richtwalzenpaar 76 mit Weggeber 8 und die Sensoranordnung 29, die mindestens zwei, hier drei HF- und/oder Mikrowellensensoren 51, 52, 53 umfasst. Durch erfindungsgemäße Auswertung der Signale von den Sensoren 51, 52, 53 in der Datenverarbeitungseinrichtung 30 werden die Anteile von Tabak, Wasser, Glycerin und Klebstoff in der mehrlagigen Folie 77 ermittelt und an die Steuereinrichtung 104 gesendet. Die Steuereinrichtung 104 regelt den Glycerinauftrag und den Klebstoffauftrag durch Ansteuerung der entsprechenden Auftragsvorrichtungen 62, 72, 73 auf der Grundlage der gemessenen und von der Datenverarbeitungseinrichtung 30 übermittelten Ist-Anteile. Die Regelung durch die Steuereinrichtung 104 erfolgt vorteilhaft unter Berücksichtigung der Positionssignale von dem Weggeber 8, so dass eine ortsaufgelöste Zuordnung der Messsignale der Sensoranordnung 29 hergestellt werden kann. Stromabwärts von der Sensoreinheit 29 können weitere Funktionseinheiten der Maschine 200 folgen.

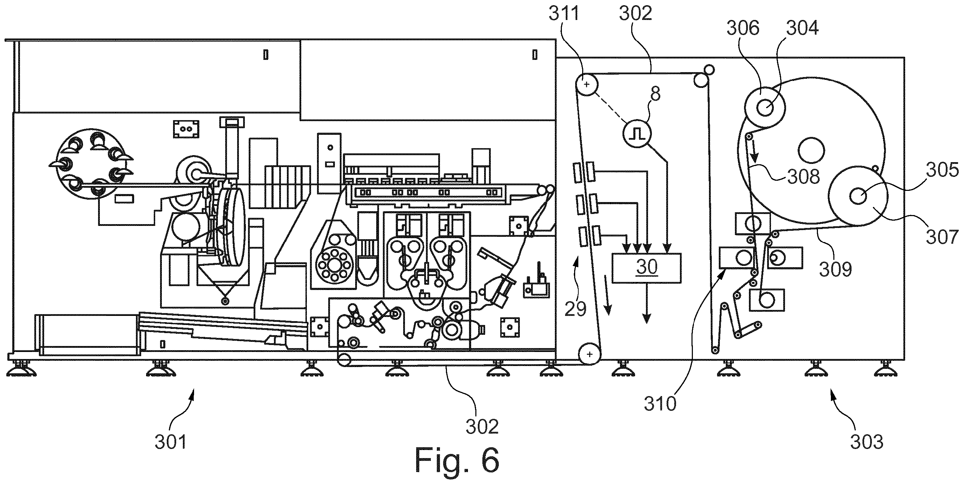

Fig. 6 betrifft eine vorteilhafte Anwendung der Erfindung in einer Anlage 300 zur Herstellung von Zigaretten. Die Anlage 300 umfasst eine Strangbildungseinheit 301 zur Herstellung von Tabakstöcken aus einer tabakhaltigen Folienbahn 302, die der Strangbildungseinheit 301 aus einer eingangsseitig angeordneten Abwickelvorrichtung 303 zugeführt wird. Die Abwickelvorrichtung 303 ist insbesondere eine Bobinenwechselvorrichtung und umfasst Aufnahmen 304, 305 für beispielsweise zwei Bobinen 306, 307, von denen zwei entsprechende Folienbahnen 308, 309 abgezogen werden, von denen mindestens eine eine Tabakfolienbahn ist, und eine Spleißstation 310 zum Verbinden der beiden Folienbahnen 308, 309.

In der Abwickelvorrichtung 303 ist eine Sensoranordnung 29, die mindestens zwei, hier drei HF- und/oder Mikrowellensensoren 51, 52, 53 umfasst, zur eingangsseitigen Messung an der Tabakfolienbahn 302 vorgesehen. Die Sensoranordnung 29 kann alternativ in der Strangbildungseinheit 301 angeordnet sein. Durch die erfindungsgemäße Auswertung der Signale von den Sensoren 51, 52, 53 in der Datenverarbeitungseinrichtung 30 werden die Anteile von Tabak, Wasser und Glycerin in der Tabakfolienbahn 302 vor dem Einlauf in die Strangbildungseinheit 301 ermittelt. Gleichzeitig können vorzugsweise interne Spleißstellen erfasst werden. Die Auswertung erfolgt vorteilhaft unter Berücksichtigung des Positionssignals von dem Weggeber 8, der beispielsweise in Bezug zu einer Umlenkrolle 311 angeordnet ist. Im Fall einer noch nicht früher gefahrenen Tabakfolienbahn 302 kann ein Einlern- oder Teach-Vorgang von der Datenverarbeitungseinrichtung 30 ausgeführt werden.

## Patentansprüche

1. Vorrichtung zur Bestimmung des Anteils mindestens eines Zusatzstoffs in einem tabakhaltigen Stoff, umfassend eine Sensoranordnung (29), die in einer Messbeziehung zu dem tabakhaltigen Stoff angeordnet und zum Betrieb mit mindestens einem ersten elektromagnetischen Wechselfeld mit einer ersten Messfrequenz und einem zweiten elektromagnetischen Wechselfeld mit einer von der ersten Messfrequenz verschiedenen zweiten Messfrequenz sowie zur Ausgabe von Signalen, die Information aus der Wechselwirkung der ersten und zweiten elektromagnetischen Wechselfelder mit dem tabakhaltigen Stoff enthalten, eingerichtet ist, und eine Datenverarbeitungseinrichtung (30), wobei die Datenverarbeitungseinrichtung (30) durch Auswertung der Signale von der Sensoranordnung (29) zur Ermittlung von zwei unabhängigen Messgrößen zu jeder der mindestens zwei Messfrequenzen und zur Bestimmung der Stofffeuchte, des Tabakanteils und des Anteils des mindestens einen Zusatzstoffs aus den mindestens vier ermittelten Messgrößen eingerichtet ist,
- wobei der Zusatzstoff ein Stoff ist, der dem Tabak zur Erzielung einer bestimmten Wirkung zugesetzt ist,
- wobei den Messsignalen der Sensoranordnung (29) Positionssignale eines Weggebers zugeordnet sind, so dass eine ortsaufgelöste Zuordnung der Messignale der Sensoranordnung hergestellt ist.

2. Vorrichtung nach Anspruch 1, **dadurch gekennzeichnet, dass** sich die erste und die zweite Messfrequenz um mindestens einen Faktor 10 und/oder um mindestens 3 GHz voneinander unterscheiden.

3. Vorrichtung nach einem der vorangehenden Ansprüche, **dadurch gekennzeichnet, dass** die Messfrequenzen in Abhängigkeit von einer Relaxationsfrequenz f0 des Zusatzstoffs gewählt ist.

4. Vorrichtung nach einem der vorangehenden Ansprüche, **dadurch gekennzeichnet, dass** die Sensoranordnung (29) mindestens einen Mikrowellensensor (32, 33) mit einer Messfrequenz im Mikrowellenbereich zwischen 300 MHz und 50 GHz umfasst.

5. Vorrichtung nach einem der vorangehenden Ansprüche, **dadurch gekennzeichnet, dass** die Sensoranordnung (29) mindestens einen Hochfrequenzsensor mit einer Messfrequenz im Hochfrequenzbereich zwischen 100 kHz und 300 MHz umfasst.

6. Vorrichtung nach einem der vorangehenden Ansprüche, **dadurch gekennzeichnet, dass** die Sensoranordnung (29) mindestens einen optischen Sensor, insbesondere einen IR-, NIR-, UV-Sensor oder einen im Sichtbaren arbeitenden Sensor umfasst.

7. Vorrichtung nach einem der vorangehenden Ansprüche, **dadurch gekennzeichnet, dass** die Stofffeuchte und der Tabakanteil sowie der Anteil des Zusatzstoffs aus den mindestens vier ermittelten Messgrößen in der Datenverarbeitungsvorrichtung (30) als beste Lösung eines überbestimmten Gleichungssystems bestimmt werden.

8. Vorrichtung nach einem der vorangehenden Ansprüche, **dadurch gekennzeichnet, dass** die Stofffeuchte und der Tabakanteil sowie die Anteile von mindestens zwei Zusatzstoffen aus den mindestens vier ermittelten Messgrößen in der Datenverarbeitungsvorrichtung (30) bestimmt werden.

9. Vorrichtung nach einem der vorangehenden Ansprüche, **dadurch gekennzeichnet, dass** der mindestens eine Zusatzstoff einen aerosolbildungsfähigen Zusatzstoff, insbesondere Glycerin, Propandiol und/oder einen Aromastoff umfasst.

10. Vorrichtung nach einem der vorangehenden Ansprüche, **dadurch gekennzeichnet, dass** die Sensoranordnung (29) mindestens einen auf einem Resonator, insbesondere einem Oberflächenkoaxialresonator, Streufeldresonator, zweiteiliger Resonator, Gabelresonator, Hohlleiter-Transmissionsresonator, Hohlleiter-Reflexionsresonator, beruhenden Sensor umfasst.

11. Zigarettenherstellmaschine (10) der Tabak verarbeitenden Industrie, umfassend eine Vorrichtung nach einem der vorangehenden Ansprüche, **dadurch gekennzeichnet, dass** die Sensoranordnung (29) in Messbeziehung zu einem in der Maschine geförderten Tabakstrang (28) oder Tabakstöcken angeordnet ist.

12. Maschine oder Anlage der Tabak verarbeitenden Industrie, umfassend eine Vorrichtung nach einem der Ansprüche 1 bis 10, **dadurch gekennzeichnet, dass** die Sensoranordnung (29) in Messbeziehung zu einer in der Maschine oder Anlage geförderten Tabakfolienbahn (40) angeordnet ist, wobei die Sensoranordnung (29) vorteilhaft ausgangsseitig in oder an einer Abwickelvorrichtung und/oder einer Tabakfolienherstellungsmaschine oder -anlage, oder eingangsseitig in oder an einer Aufwickelvorrichtung, einem Verteiler oder einer Strangeinheit einer Zigarettenherstellmaschine oder einer Crimpeinheit, oder in oder an einer Fördervorrichtung zwischen derartigen Maschinen angeordnet ist.

13. Verfahren zur Bestimmung der Menge oder des Gewichtsanteils mindestens eines Zusatzstoffs in einem tabakhaltigen Stoff, umfassend Verwenden einer Sensoranordnung (29) in einer Messbeziehung zu dem tabakhaltigen Stoff, wobei die Sensoranordnung (29) mit mindestens einem ersten elektromagnetischen Wechselfeld mit einer ersten Messfrequenz und einem zweiten elektromagnetischen Wechselfeld mit einer von der ersten Messfrequenz verschiedenen zweiten Messfrequenz betrieben wird und Signale ausgibt, die Information aus der Wechselwirkung der ersten und zweiten elektromagnetischen Wechselfelder mit dem tabakhaltigen Stoff enthalten, und Auswerten der von der Sensoranordnung (29) ausgegebenen Signale einschließlich Ermitteln von zwei unabhängigen Messgrößen zu jeder der mindestens zwei Messfrequenzen und Bestimmen mindestens der Stofffeuchte, des Tabakanteils und des Anteils des mindestens einen Zusatzstoffs aus den mindestens vier ermittelten Messgrößen,
- wobei der Zusatzstoff ein Stoff ist, der dem Tabak zur Erzielung einer bestimmten Wirkung zugesetzt wird,
- wobei den Messsignalen der Sensoranordnung (29) Positionssignale eines Weggebers zugeordnet werden, so dass eine ortsaufgelöste Zuordnung der Messignale der Sensoranordnung hergestellt wird.

14. Verfahren nach Anspruch 13, **dadurch gekennzeichnet, dass** der ermittelte Anteil des mindestens einen Zusatzstoffs, des Tabaks und/oder der Stofffeuchte mit einem entsprechenden Sollwert verglichen wird.

15. Verfahren nach Anspruch 13 oder 14, **dadurch gekennzeichnet, dass** auf der Grundlage des mindestens einen bestimmten Zusatzstoffanteils eine Regelung einer Maschine oder Anlage der Tabak verarbeitenden Industrie, insbesondere einer darin angeordneten Zugabevorrichtung zur Zugabe des mindestens einen Zusatzstoffs zu dem Tabak, durchgeführt wird.

## Claims

1. Device for determining the proportion of at least one additive in a tobacco-containing substance, comprising a sensor arrangement (29) which is arranged in a measuring relation to the tobacco-containing substance and is adapted to operate with at least a first electromagnetic alternating field with a first measuring frequency and a second electromagnetic alternating field with a second measuring frequency different from the first measuring frequency, and to output signals which contain information from the interaction of the first and second electromagnetic alternating fields with the tobacco-containing substance, and a data processing device (30), wherein the data processing device (30) is adapted by evaluating the signals from the sensor arrangement (29) to determine two independent measurement variables for each of the at least two measurement frequencies and to determine the substance moisture, the tobacco proportion and the proportion of the at least one additive from the at least four measurement variables determined,
- wherein the additive is a substance which is added to the tobacco to achieve a specific effect,
- wherein the measurement signals of the sensor arrangement (29) are associated with position signals of a displacement sensor, so that a spatially resolved association of the measurement signals of the sensor arrangement is established.

2. Device according to claim 1, **characterized in that** the first and the second measurement frequency differ from each other by at least a factor of 10 and/or by at least 3 GHz.

3. Device according to any one of the preceding claims, **characterized in that** the measurement frequencies are selected as a function of a relaxation frequency f0 of the additive.

4. Device according to any one of the preceding claims, **characterized in that** the sensor arrangement (29) comprises at least one microwave sensor (32, 33) with a measuring frequency in the microwave range between 300 MHz and 50 GHz.

5. Device according to any of the preceding claims, **characterized in that** the sensor arrangement (29) comprises at least one high-frequency sensor with a measuring frequency in the high-frequency range between 100 kHz and 300 MHz.

6. Device according to any one of the preceding claims, **characterized in that** the sensor arrangement (29) comprises at least one optical sensor, in particular an IR, NIR, UV sensor or a sensor operating in the visible.

7. Device according to any one of the preceding claims, **characterized in that** the substance moisture and the tobacco proportion as well as the proportion of the additive are determined from the at least four determined measured variables in the data processing device (30) as the best solution of an overdetermined system of equations.

8. Device according to any one of the preceding claims, **characterized in that** the substance moisture and the tobacco proportion as well as the proportions of at least two additives are determined from the at least four determined measured variables in the data processing device (30).

9. Device according to any one of the preceding claims, **characterized in that** the at least one additive comprises an aerosol-forming additive, in particular glycerol, propanediol and/or a flavoring agent.

10. Device according to one of the preceding claims, **characterized in that** the sensor arrangement (29) comprises at least one sensor based on a resonator, in particular a surface coaxial resonator, stray field resonator, two-part resonator, fork resonator, waveguide transmission resonator, waveguide reflection resonator.

11. Cigarette manufacturing machine (10) of the tobacco processing industry, comprising a device according to any one of the preceding claims, **characterized in that** the sensor arrangement (29) is arranged in measuring relation to a tobacco rod (28) or tobacco sticks conveyed in the machine.

12. A machine or plant of the tobacco processing industry, comprising a device according to any one of claims 1 to 10, **characterized in that** the sensor arrangement (29) is arranged in measuring relation to a tobacco film web (40) conveyed in the machine or plant, wherein the sensor arrangement (29) is advantageously arranged on the output side in or at an unwinding device and/or a tobacco film manufacturing machine or plant, or on the input side in or at a winding device, a distributor or a rod unit of a cigarette manufacturing machine or a crimping unit, or in or at a conveying device between such machines.

13. A method of determining the amount or weight proportion of at least one additive in a tobacco-containing substance, comprising using a sensor arrangement (29) in a measuring relation with the tobacco-containing substance, wherein the sensor arrangement (29) is operated with at least a first alternating electromagnetic field having a first measuring frequency and a second alternating electromagnetic field having a second measuring frequency different from the first measuring frequency and outputs signals which contain information from the interaction of the first and second electromagnetic alternating fields with the tobacco-containing substance, and evaluating the signals output by the sensor arrangement (29) including determining two independent measurement variables for each of the at least two measurement frequencies and determining at least the substance moisture, the tobacco proportion and the proportion of the at least one additive from the at least four measurement variables determined,
- wherein the additive is a substance which is added to the tobacco to achieve a specific effect,
- wherein position signals of a displacement sensor are assigned to the measurement signals of the sensor arrangement (29), so that a spatially resolved assignment of the measurement signals of the sensor arrangement is produced.

14. Method according to claim 13, **characterized in that** the determined proportion of the at least one additive, of the tobacco and/or of the substance moisture is compared with a corresponding setpoint value.

15. Method according to claim 13 or 14, **characterized in that**, on the basis of the at least one determined proportion of additive, a control of a machine or plant of the tobacco processing industry, in particular of an adding device arranged therein for adding the at least one additive to the tobacco, is carried out.

## Revendications

1. Dispositif destiné à déterminer la proportion d'au moins un additif au sein d'une substance contenant du tabac et comprenant un ensemble de capteurs (29) lequel est disposé de manière à pouvoir soumettre la substance contenant du tabac à une mesure et lequel est configuré de manière à pouvoir fonctionner en association avec au moins un premier champ alternatif électromagnétique ayant une première fréquence de mesure et un deuxième champ alternatif électromagnétique ayant une deuxième fréquence de mesure différente de la première fréquence de mesure ainsi qu'à émettre des signaux contenant l'information obtenue par l'interaction des premier et deuxième champs alternatifs électromagnétiques avec la substance contenant du tabac, et un organe de traitement des données (30), l'organe de traitement des données (30) étant configuré de manière à ce qu'il analyse les signaux émis par l'ensemble de capteurs (29) pour ainsi mesurer, pour chacune des au moins deux fréquences de mesure, deux valeurs indépendantes puis déterminer, à partir des au moins quatre valeurs mesurées, l'humidité de la substance, la proportion de tabac et la proportion de l'au moins un additif,
- ledit additif étant une substance que l'on ajoute audit tabac pour obtenir un certain effet,
- les signaux mesurés par l'ensemble de capteur (29) étant associés à des signaux de position d'un capteur de déplacement, permettant ainsi d'établir une association résolue dans l'espace des signaux mesurés par l'ensemble de capteurs.

2. Dispositif selon la revendication 1, **caractérisé en ce que** la différence entre la première et la deuxième fréquences de mesure correspond au moins à un facteur de 10 et/ou au moins à 3 GHz.

3. Dispositif selon l'une des revendications précédentes, **caractérisé en ce que** les fréquences de mesure sont choisies en fonction d'une fréquence de relaxation f0 dudit additif.

4. Dispositif selon l'une des revendications précédentes, **caractérisé en ce que** l'ensemble de capteurs (29) comprend au moins un capteur à micro-ondes (32, 33) ayant une fréquence de mesure comprise dans les micro-ondes allant de 300 MHz à 50 GHz.

5. Dispositif selon l'une des revendications précédentes, **caractérisé en ce que** l'ensemble de capteurs (29) comprend au moins un capteur à radiofréquences ayant une fréquence de mesure comprise dans les radiofréquences allant de 100 kHz à 300 MHz.

6. Dispositif selon l'une des revendications précédentes, **caractérisé en ce que** l'ensemble de capteurs (29) comprend au moins un capteur optique, s'agissant notamment d'un capteur IR, PIR, UV ou d'un capteur fonctionnant dans le domaine visible.

7. Dispositif selon l'une des revendications précédentes, **caractérisé en ce que** l'humidité de la substance, la proportion de tabac ainsi que la proportion dudit additif sont déterminés, à partir des au moins quatre valeurs mesurées dans l'organe de traitement des données (30), sous forme de la meilleure solution d'un système d'équations surdéterminé.

8. Dispositif selon l'une des revendications précédentes, **caractérisé en ce que** l'humidité de la substance et la proportion de tabac ainsi que les proportions d'au moins deux additifs sont déterminés à partir des au moins quatre valeurs mesurées dans l'organe de traitement des données (30).

9. Dispositif selon l'une des revendications précédentes, **caractérisé en ce que** ledit au moins un additif comprend un additif capable de former un aérosol, s'agissant notamment de glycérol, de propanediol, et/ou un arôme.

10. Dispositif selon l'une des revendications précédentes, **caractérisé en ce que** l'ensemble de capteurs (29) comprend au moins un capteur à base d'un résonateur, s'agissant notamment d'un résonateur coaxial à surfaces, d'un résonateur à champ de dispersion, d'un résonateur à deux constituants, d'un résonateur à branches, d'un résonateur à transmission par guide d'onde, d'un résonateur à réflexion par guide d'onde.

11. Machine à fabriquer des cigarettes (10) pour l'industrie de traitement du tabac, comprenant un dispositif selon l'une des revendications précédentes, **caractérisée en ce que** l'ensemble de capteurs (29) est disposé de manière à pouvoir soumettre un boudin de tabac (28) transporté dans ladite machine ou des bâtonnets de tabac à une mesure.

12. Machine ou système pour l'industrie de traitement du tabac, comprenant un dispositif selon l'une des revendications 1 à 10, **caractérisé en ce que** l'ensemble de capteurs (29) est disposé de manière à ce qu'il soumette un feuillet de tabac continu (40) qui est transporté dans ladite machine ou ledit système à une mesure, l'ensemble de capteurs (29) étant disposé avantageusement, du côté de la sortie, dans ou sur un dérouleur et/ou une machine / un système de fabrication de feuillets de tabac, ou bien, du côté de l'entrée, dans ou sur un enrouleur, un organe de distribution ou une unité à boudins d'une machine à fabriquer des cigarettes ou d'une unité de sertissage, ou bien dans ou sur un dispositif de transport situé entre de tels machines.

13. Procédé destiné à déterminer la quantité ou la proportion en poids d'au moins un additif au sein d'une substance contenant du tabac et comprenant la mise en œuvre d'un ensemble de capteurs (29) permettant de soumettre la substance contenant du tabac à une mesure, le dispositif de capteurs (29) fonctionnant en association avec au moins un premier champ alternatif électromagnétique ayant une première fréquence de mesure et un deuxième champ alternatif électromagnétique ayant une deuxième fréquence de mesure différente de la première fréquence de mesure et émettant des signaux contenant l'information obtenue par l'interaction des premier et deuxième champs alternatifs électromagnétiques avec la substance contenant du tabac, et l'analyse des signaux émis par l'ensemble de capteurs (29), y compris la mesure, pour chacune des au moins deux fréquences de mesure, de deux valeurs indépendantes et la détermination, à partir des au moins quatre valeurs mesurées, au moins de l'humidité de la substance, de la proportion de tabac et de la proportion de l'au moins un additif,
- ledit additif étant une substance que l'on ajoute audit tabac pour obtenir un certain effet,
- les signaux mesurés par l'ensemble de capteur (29) étant associés à des signaux de position d'un capteur de déplacement, permettant ainsi d'établir une association résolue dans l'espace des signaux mesurés par l'ensemble de capteurs.

14. Procédé selon la revendication 13, **caractérisé en ce que** les proportions de l'au moins un additif, du tabac et/ou de l'humidité de la substance, telles qu'elles ont été déterminées, sont comparées chacune à sa valeur cible.

15. Procédé selon les revendications 13 ou 14, **caractérisé en ce que**, sur la base de l'au moins une proportion d'additif déterminée, on met en œuvre un réglage d'une machine ou d'un système de l'industrie de traitement du tabac, plus particulièrement d'un organe d'addition qui est disposé au sein de celle-ci / de celui-ci et qui permet d'ajouter l'au moins un additif audit tabac.
